# EUROPEAN PATENT SPECIFICATION

(11) **EP 3 231 699 B1**
(45) Date of publication and mention of the grant of the patent: **24.02.2021**
(21) Application number: 17167248.8
(22) Date of filing: 18.03.2011
(51) Int. Cl.: B62M 6/40, B62M 6/80, B62J 99/00, B60R 13/10, B62M 23/02, B62M 6/45, B60L 3/08

(54) **VEHICLE AND VEHICLE REGISTRATION PLATE**
FAHRZEUG UND FAHRZEUGKENNZEICHEN
VÉHICULE ET PLAQUE D'IMMATRICULATION DE VÉHICULE

(30) Priority: 18.03.2010 DE 102010016009
(43) Date of publication of application: 18.10.2017
(62) Divisional of application: 15167710.1
(73) Proprietor: TQ-Systems GmbH, 82229 Seefeld (DE)
(72) Inventor: JÄKEL, Jürgen, 82024 Taufkirchen (DE)
(74) Representative: Schweiger, Martin

(56) References cited:
- GB-A- 2 453 598
- US-A- 5 826 675

## Description

The application relates to a vehicle with a drive train having an electrical motor, e.g. a bicycle with an electrical drive or with an electrical auxiliary drive. It also relates to a vehicle registration plate for such a vehicle as well as to a method for operating such a vehicle.

The DE 20 2005 006 684 U1 shows an electrical vehicle with an auxiliary motor which supports a rider of the vehicle. The support by the motor is limited to a maximum speed of the vehicle and to the acceleration phase when starting to ride the vehicle. To comply with statutory provisions, the maximum speed for a support by the auxiliary motor is currently 25 km/h in many countries.

The application provides a vehicle with a broad intended use and a high flexibility for the user. The application further provides a vehicle registration plate for such a vehicle.

A vehicle comprises a drive with an electrical motor, whereby the drive comprises at least two operational modes. An operation parameter of the drive is limited to a first target area in a first operational mode and to a second target area in the second operational mode. The drive is only operable in the second operational mode if written information of a tag at or on the vehicle is visible. The drive is operable in the first operational mode, if written information of the tag is invisible.

In the embodiment according to the invention, the tag comprises a vehicle registration plate.

The switching between different operational modes of the vehicle may easily be done without the help of tools, thereby excluding misuse or at least sufficiently impeding misuse. Switching from an operational mode, in which the vehicle does not need a tag to be visible, to an operational mode, in which the tag or the written information on the tag is visible, is done by making the tag being visible. Switching from a vehicle with an obligation for a certificate to a vehicle without such an obligation is made easy. Thus, the vehicle provides a high flexibility for the user and it is made sure that it complies with the statutory provisions.

Electrical bicycles, so called e-bikes, get more and more popular. The motor of e-bikes is controlled independently of the pedalling power provided by a user. The power of the motor is controlled by a manual control element, for example a turning handle comparable to that of a moped. In Germany, e-bikes have stricter statutory provisions than pedelecs. E-bikes have a maximum speed of 45 km/h, have to comprise a vehicle registration plate and require an inspection document for a motor-assisted bicycle. The application provides an e-bike that can be converted into an electrical bicycle, for which no certificate is obligatory.

Pedelec and e-bikes each are convenient only for specific intended use. A pedelec can be used as a bicycle in a forestall or in a pedestrian area, whereas an e-bike provides a faster transportation on streets due to its higher speed and, accordingly, provides more driving pleasure.

A vehicle providing enhanced flexibility unifies characteristics of a pedelec and of an e-bike in one single vehicle. On one hand, it can support the rider with an auxiliary motor in areas in which the use of an e-bike or a moped is not allowed. On the other hand, it provides, after switching, a fast transportation means, even if a user does not pedal. Ideally, the vehicle should provide a pedelec function as well as an e-bike function. The operation of a vehicle as e-bike requires the provision of a tag such as a vehicle registration plate. Technical means provide that the vehicle is not accidentally or improperly used without a vehicle registration plate.

According to an inventive aspect, a method is provided for operating a vehicle with a drive comprising at least one electrical motor, whereby the drive comprises at least two different operational modes. An operation parameter of the drive is limited to a first target area in a first operational mode and to a second target area in a second operational mode. The second operational mode is only activated, that means that the vehicle can operate in the second operational mode, if a written information on a tag of the vehicle is visible. The drive is operable in the first operational mode, if written information of the tag is invisible.

The drive may comprise at least two electrical motors of which only the first one is operable in the first operational mode, whereby in the second operational mode, the second electrical motor is operated stand-alone or both the first and the second electrical motors are operated concurrently.

Embodiments of the invention will be explained with reference to the attached figures.
Figure 1 shows a schematic view of a vehicle according to an embodiment according to the invention;
Figure 2- Figure 5 are showing schematic diagrams of a drive unit according to a not claimed embodiment;
Figure 6 - Figure 9 are showing an embodiment of a vehicle registration plate according to the invention;
Figure 10 - Figure 12 are showing a further not claimed embodiment of a vehicle registration plate.

Parts with same or similar functions in the figures are provided with the same reference numbers.

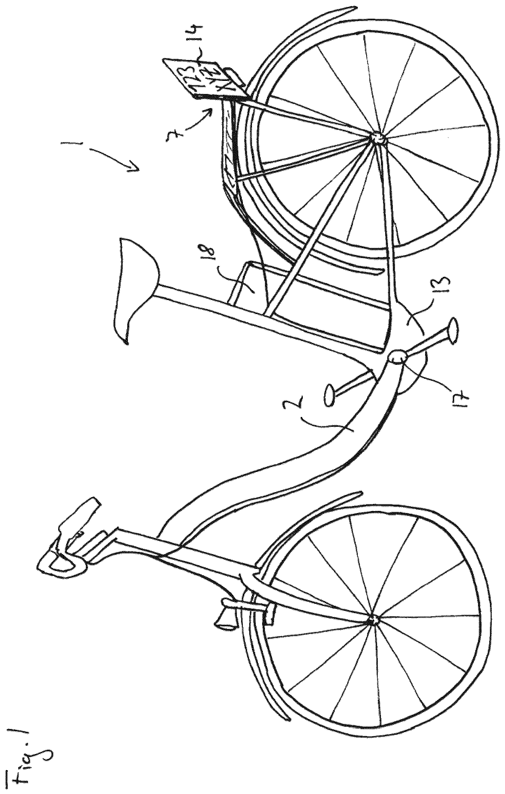

Figure 1 shows a two-wheeler vehicle 1 according to an embodiment of the application.

The vehicle 1 comprises an electrical auxiliary drive with a drive unit 13 being mounted on a frame 2.

The drive unit 13 comprises an electrical motor, not shown in figure 1, being integrated in the frame 2 in the area of the bottom bracket 17. The electrical motor comprises two operational modes. The drive unit 13 further comprises an accumulator 18 for supplying power to the electrical motor 12.

In a first operational mode of the electrical motor, the vehicle 1 is operating as a pedelec and the electrical motor provides support depending on the pedalling power provided by the rider. In this first operational mode, the nominal continuous power of the electrical motors is unlimited at a speed between 0 and 6 km/h and equals 250 W at a speed between 6 und 25 km/h. At speeds exceeding 25 km/h, the electrical motor does not support the rider.

In its second operational mode, vehicle 1 is operated as an e-bike with a nominal continuous power of the electrical motor of 4 kW.

The drive unit 13 can only be used in the second operational mode if the second operational mode is explicitly activated. For that purpose, the vehicle 1 comprises a vehicle registration plate 14 with an interface 7 to the vehicle 1, whereby the interface 7 comprises an electrical plug connection. The vehicle registration plate 14 comprises a written information in form of the registration number of the vehicle. The vehicle registration plate 14 can be removed from or attached to the vehicle 1.

When the vehicle registration plate 14 is mechanically attached to the vehicle 1, the electrical connection at the interface 7 is provided at the same time. The vehicle registration plate 14 comprises a key unit that interacts with a power electronic circuitry of the electrical motor and activates the second operational mode. Thus, the second operational mode is only activated if the key unit and consequently the vehicle registration plate 14 are connected with the vehicle 1.

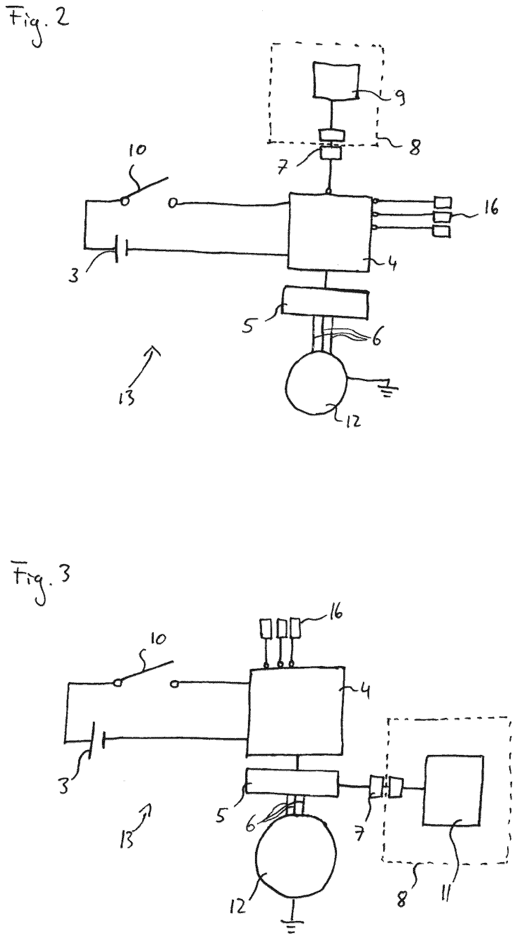

Figure 2 schematically shows a circuit diagram of a drive unit 13 according to a not claimed embodiment. The drive unit 13 comprises an electrical motor 12, a power supply 3, which in this embodiment is provided as an accumulator, and an on-off-switch 10. A motor control device 4 and a power electronic circuitry 5 are connected via conductors 6 with motor windings of the electrical motors 12.

The motor control device 4 receives measurement values from a plurality of sensors 16, especially the vehicle speed, the number of pedal revolutions, the pushing force at the pedals as well as the current and the voltage of the control of the electrical motor 12.

The key unit 8 is mounted on the drive unit 13 via the interface 7. The key unit 8 which is indicated by the dotted line.

In a first embodiment, the key unit 8 comprises an EEPROM 9 with an integrated vehicle chassis number for unambiguously assigning the vehicle registration plate 14 with the vehicle 1. The EEPROM 9 is readable by the motor control device 4.

The power electronic circuitry 5 is works in a stand-alone-mode, that means without the key unit, only according to the official pedelec rules, that means in the first operational mode of the electromotor 12. The second operational mode has to be activated by the control device 4.

During operation, the drive unit 13 works as follows. The drive unit 13 is supplied with energy by operating the on-off-switch 10 at the start of the vehicle 1. The motor control device 4 checks if the key unit 8 and accordingly if the vehicle registration plate is connected to the vehicle reading the EEPROM 9. If this is not done successfully, for example when the vehicle registration plate 14 is removed, the electrical motor 12 is only operable in the first operational mode. The vehicle 1 is then operated as a pedelec, whereby the motor control device 4 controls the power of the electrical motor 12 depending on the power which is provided by the pushing of the rider.

If a vehicle registration plate 14 is mounted on the vehicle 1 and electrically connected with the vehicle 1 via the interface 7, the motor control device 4 checks the vehicle chassis number which is stored on the EEPROM 9 by reading the EEPROM 9 and compares the number with a value that is stored in the motor control device 4. If the assignment of the vehicle registration plate to the vehicle was successful, the motor control device 4 activates the required additional power for the second operational mode in the power electronic circuitry 5, such that the vehicle is operated as a moped with a nominal continuous power of 4 kW and with maximum speeds of up to 45 km/ h.

The motor control device 4 regularly reads the EEPROM 9 during the operation to control the presence of the vehicle registration plate. If the read out of the EEPROM 9 was not successful, the motor control device 4 cancels the activation of the second operational mode such that the vehicle is temporarily only operable as a pedelec in the firs operational mode.

Figure 3 shows a schematic circuit diagram of a drive unit according to a second not claimed embodiment. The second embodiment differs from the first one by the key unit 8 comprising a control device 11.

The power electronic circuitry 5 is designed such that it operates in a stand-alone mode according to the pedelec regulation, that means in the first operational mode of the electrical motor 12.

If the key unit 8 is electrically connected with the drive unit 13 via the interface 7, the control device 11 selects the operational mode and activates the additional power which is required for the second operational mode of the power electronic circuitry 5.

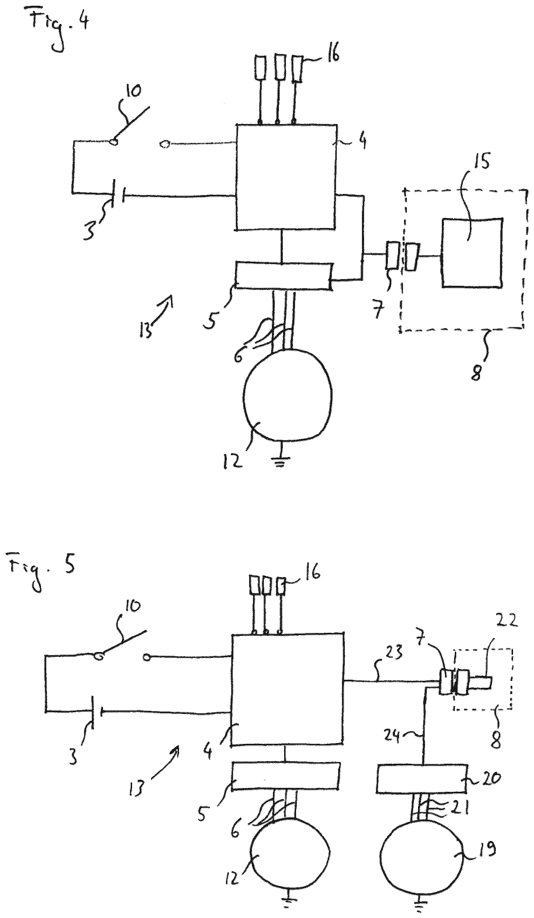

Figure 4 shows a schematic circuit diagram of a drive unit 13 according to a third not claimed embodiment. The third embodiment differs from the first and the second ones by the key unit 8 comprising a coding unit 15. In the third embodiment, the power electronic circuitry 5 provides in the stand-alone mode a vehicle according to the pedelec regulation, which means in the first operational mode of the electrical motor 12.

If the key unit 8 is connected to the drive unit 13 via the interface 7, the coding unit 15 receives control signals from the motor control device 4 as input signals and modifies them in a predetermined manner. Only then the additional power required for the second operational mode in the power electronic circuitry 5 is provided.

Figure 5 shows a schematic circuit diagram of a drive unit 13 according to a fourth not claimed embodiment. The fourth embodiment differs from the previous one by the provision of a second electrical motor 19 that is activated in the second operational mode of the drive unit 13.

The second electrical motor 19 is operable if the key unit 8 is electrically connected with the drive unit 13 via the interface 7. The key unit 8 comprises, in this embodiment, a bridge 22 that connects the conductor 23 from the motor control device 4 with a conductor 24 from the power electronic circuitry 12 of the second electrical motor 19.

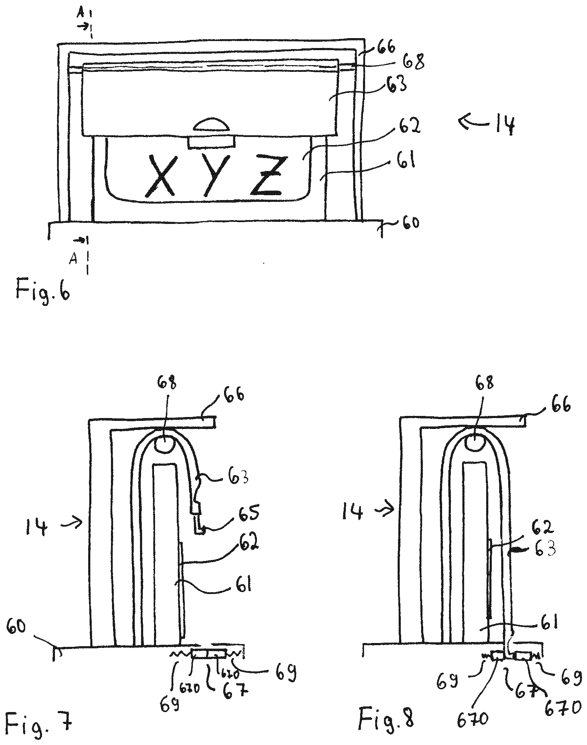

Figure 6 shows ; a claimed embodiment of a vehicle registration plate 14. The vehicle registration plate 14 is mounted on a carrier 60 of a bicycle and it comprises a holding plate 61, a display plate 62, a hook 65, a hood 66 and a shutter 63. The display plate 62 comprises written information with a registration number and it is fixed to the holding plate 61. The shutter 63 is in a first, upper position, such that the display plate 62 is visible from an observer behind the vehicle.

Figure 7 shows a cross section of the vehicle registration plate 14 along the line A-A of Figure 6. The arrow F indicates the driving direction of the vehicle. The hood 66 has on opening to the back of the vehicle. The shutter 63 is fixed with its first end to the carrier 60 in the front of the holding plate 61. The second end of the shutter 63 comprises a electrically isolating hook 65. The vehicle registration plate comprises a pulley 68 running vertically above the holding plate 61. The shutter 63 lies on the pulley 68 such that one part of the shutter 63 is positioned behind the holding plate 61. Figure 7 shows the shutter 63 in the first position in which the hook 65 is above the display plate 62 such that the display plate 62 is visible.

The carrier 60 comprises a mechanical switch 67 having two rods 670 and two springs 69. The two rods 670 comprise electrical connectors. The springs 69 in their extended state are pressing the two rods 670 together, thereby providing an electrical contact. A first conductor, not shown in Figure 7, from the motor control device is connected to the first rod 670 and a second conductor, not shown in Figure 7, from the motor control device is connected to the second rod 670.

The motor control device measures that there is an electrical connection between the first conductor and the second conductor via the two rods 670. If this is the case, the vehicle is operated as an e-bike in the second operational mode.

Figure 8 shows the vehicle registration plate 14 of Figures 6 an 7 in a second position. In the second position, the shutter 63 is stretched such that the hook 65 is locked in the switch 67, thereby separating the two rods 670 and compressing the springs 69. As the hook 65 is electrically isolating, there is no electrical connection between the first conductor and the second conductor. This is detected by the motor control device and the vehicle is operated in the first operational mode as a pedelec.

Accordingly, if the display plate 62 is visible as in Figures 6 and 7, the vehicle operates in the second operational mode. If the display plate 62 is not visible as in Figure 8, the vehicle operates in the first operational mode.

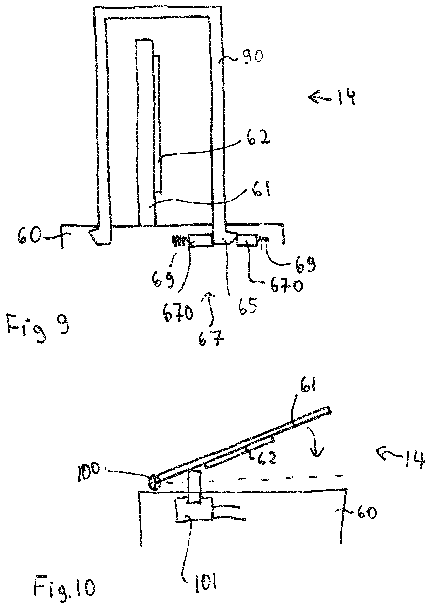

Figure 9 shows a further embodiment of a vehicle registration plate 14, which comprises a box 90, a holding plate 61 and a display plate 62. The carrier 60 comprises a switch 67 similar to the previous embodiment. Figure 9 shows the box 90 being mounted on a carrier 60 of the vehicle by fixing an electrically isolating hook 65 of the box 90 to the switch 67. The box 90 covers the holding plate 61 and the display plate 62 such that the display plate 62 it not visible by an observer. As the hook 65 is electrically isolating, the electrical connection between the two rods 670 is interrupted.

If the box 90 with its hook 65 is removed, not shown in Figure 9, the rods 670 are pressed together by the spring 69. The detection of the operational modes is done similar to the embodiment of Figures 6 to 8. Accordingly, if the display plate 62 is visible as in Figures 9, the vehicle operates in the second operational mode. If the display plate 62 is not visible, the vehicle operates in the first operational mode.

Figure 10 shows a further not claimed embodiment of a vehicle registration plate 14. The vehicle registration plate 14 comprises a holding plate 61 and a display plate 62. The carrier 60 comprises an on-off-switch 101. The display plate 62 is fixed to the holding plate 61 and the holding plate 61 is pivot-mounted on a shaft 100 which is located at the carrier 60. The holding plate 61 may be put in a vertical position in which the display plate 62 is visible. In this position, the on-off-switch is on. If the holding plate 61 is hinged down to a horizontal position, the on-off-switch 101 is switched off.

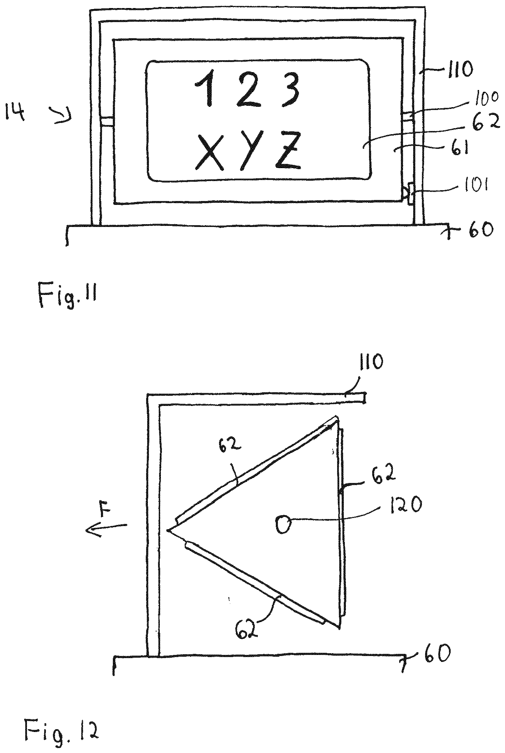

Figure 11 shows a further not claimed embodiment of a vehicle registration plate 14. The vehicle registration plate 14 comprises a holding plate 61 and a display plate 62. The display plate 62 is fixed to the holding plate 61 and the holding plate 61 is pivot-mounted on a shaft 100, which is located at the middle of the holding plate 61. The holding plate 61 may be put in a vertical position in which the display plate 62 is visible. In this position, the on-off-switch 101 is on. If the holding plate is turned to a horizontal position, the on-off-switch 101 is switched off.

Figure 12 shows a further not claimed embodiment of a vehicle registration plate 14 in a top view. The vehicle registration plate 14 is pivot-mounted at a vertical shaft 120. A box 100 comprising the vehicle registration plate 14 has front and sideward ceilings such that the vehicle registration plate 14 is only visible from the back of the vehicle. The vehicle registration plate 14 has a form of a triangle. On each side of the triangle, there is provided one display plate 62. Only the display plate 62 which is turned to the back is visible from an observer outside the vehicle 1. The vehicle registration plate 14 can be turned around the shaft 120 to display further display plates 62.

The display plates 62 differ from each other by its written information. Each of one the three display plates 62 provides a different maximum speed for the vehicle 1. Turning the vehicle registration plate 14 activates switches, not shown, which in turn activate one of three operational modes. The operational modes limit the speed of the vehicle to the currently displayed maximum speed.

## Claims

1. Vehicle (1) with a drive having at least one electrical motor (12), whereby the drive comprises at least two different operational modes and whereby an operation parameter of the drive is limited to a first target area in a first operational mode and to a second target area in a second operational mode, the vehicle (1) comprising a vehicle registration plate (14) that is mounted on a carrier (60), the vehicle registration plate (14) comprising a holding plate (61),
a display plate (62), an electrically isolating hook (65) and either a hood (66) with a shutter (63) or a box (90), the carrier (60) comprising a mechanical switch (67),
the vehicle comprising a motor control device (4),
the switch (67) comprising a first rod (670) that is connected to a first conductor from the motor control device (4), and the switch (67) comprising a second rod (670) that is connected to a second conductor from the motor control device (4), wherein the motor control device measures whether there is an electrical connection between the first conductor and the second conductor via the two rods (670),
whereby the drive is operable in the second operational mode, if the shutter (63) or the box (90) is in a first position in which the display plate (62) is visible and there is an electrical connection between the first conductor and the second conductor via the first rod (670) and the second rod (670), and the drive is operable in the first operational mode, if the shutter (63) or the box (90) is in a second position in which the display plate (62) is not visible and the electrically isolating hook (65) separates the first rod (670) and the second rod (670) in the second position.

2. Vehicle (1) according to claim 1,
whereby the nominal continuous power of the drive is restricted to a first maximum value in the first operational mode and is restricted to a second maximum value in the second operational mode, whereby the second maximal value is larger than the first maximum value.

3. Vehicle (1) according to one of the claims 1 or 2, whereby the speed of the vehicle (1) is restricted to a first maximum value in the first operational mode and is restricted to a second maximum value in the second operational mode, whereby the second maximum value is larger than the first maximum value.

4. Vehicle registration plate arrangement (14),
the vehicle registration plate (14) comprising a holding plate (61), a display plate (62), an electrically isolating hook (65) and either a hood (66) with a shutter (63) or a box (90),
the vehicle registration plate (14) being provided for mounting on a carrier (60) of a vehicle (1), the carrier (60) comprising a mechanical switch (67), the vehicle comprising a motor control device (4),
the switch (67) comprising a first rod (670) that is connected to a first conductor from the motor control device (4), and the switch (67) comprising a second rod (670) that is connected to a second conductor from the motor control device (4), wherein the motor control device measures whether there is an electrical connection between the first conductor and the second conductor via the two rods (670),
the vehicle (1) comprising a drive with at least one electrical motor (12), whereby the drive comprises at least two different operational modes and whereby an operation parameter of the drive is limited to a first target area in a first operational mode and to a second target area in a second operational mode,
whereby the drive is operable in the second operational mode, if the shutter (63) or the box (90) is in a first position in which the display plate (62) is visible and there is an electrical connection between the first conductor and the second conductor via the first rod (670) and the second rod (670), and the drive is operable in the first operational mode, if the shutter (63) or the box (90) is in a second position in which the display plate (62) is not visible and the electrically isolating hook (65) separates the first rod (670) and the second rod (670) in the second position.

## Patentansprüche

1. Fahrzeug (1) mit einem Antrieb, der mindestens einen Elektromotor (12) aufweist, wobei der Antrieb mindestens zwei verschiedene Betriebsmodi umfasst und wobei ein Betriebsparameter des Antriebs in einem ersten Betriebsmodus auf einen ersten Sollbereich und in einem zweiten Betriebsmodus auf einen zweiten Sollbereich begrenzt ist, wobei das Fahrzeug (1) ein Fahrzeugkennzeichen (14) umfasst, das auf einem Träger (60) montiert ist, wobei das Fahrzeugkennzeichen (14) eine Halteplatte (61),
ein Anzeigeschild (62), einen elektrisch isolierenden Haken (65) und entweder eine Haube (66) mit einem Verschluss (63) oder ein Gehäuse (90) umfasst,
wobei der Träger (60) einen mechanischen Schalter (67) umfasst,
wobei das Fahrzeug eine Motorsteuervorrichtung (4) umfasst, wobei der Schalter (67) einen ersten Stab (670) umfasst, der mit einem ersten Leiter der Motorsteuervorrichtung (4) verbunden ist, und wobei der Schalter (67) einen zweiten Stab (670) umfasst, der mit einem zweiten Leiter der Motorsteuervorrichtung (4) verbunden ist, wobei die Motorsteuervorrichtung misst, ob eine elektrische Verbindung zwischen dem ersten Leiter und dem zweiten Leiter über die zwei Stäbe (670) besteht, wobei der Antrieb in dem zweiten Betriebsmodus betreibbar ist, wenn sich der Verschluss (63) oder das Gehäuse (90) in einer ersten Position befindet, in der das Anzeigeschild (62) sichtbar ist und eine elektrische Verbindung zwischen dem ersten Leiter und dem zweiten Leiter über den ersten Stab (670) und den zweiten Stab (670) besteht, und der Antrieb in dem ersten Betriebsmodus betreibbar ist, wenn sich der Verschluss (63) oder das Gehäuse (90) in einer zweiten Position befindet, in der das Anzeigeschild (62) nicht sichtbar ist und der elektrisch isolierende Haken (65) den ersten Stab (670) und den zweiten Stab (670) in der zweiten Position trennt.

2. Fahrzeug (1) nach Anspruch 1,
wobei die nominale Dauerleistung des Antriebs in dem ersten Betriebsmodus auf einen ersten Maximalwert beschränkt ist und in dem zweiten Betriebsmodus auf einen zweiten Maximalwert beschränkt ist, wobei der zweite Maximalwert größer als der erste Maximalwert ist.

3. Fahrzeug (1) nach einem der Ansprüche 1 oder 2,
wobei die Geschwindigkeit des Fahrzeugs (1) in dem ersten Betriebsmodus auf einen ersten Maximalwert beschränkt ist und in dem zweiten Betriebsmodus auf einen zweiten Maximalwert beschränkt ist, wobei der zweite Maximalwert größer als der erste Maximalwert ist.

4. Fahrzeugkennzeichenanordnung (14),
wobei das Fahrzeugkennzeichen (14) eine Halteplatte (61), ein Anzeigeschild (62), einen elektrisch isolierenden Haken (65) und entweder eine Haube (66) mit einem Verschluss (63) oder ein Gehäuse (90) umfasst,
wobei das Fahrzeugkennzeichen (14) zur Montage an einem Träger (60) eines Fahrzeugs (1) vorgesehen ist, wobei der Träger (60) einen mechanischen Schalter (67) umfasst, wobei das Fahrzeug eine Motorsteuervorrichtung (4) umfasst, wobei der Schalter (67) einen ersten Stab (670) umfasst, der mit einem ersten Leiter der Motorsteuervorrichtung (4) verbunden ist, und wobei der Schalter (67) einen zweiten Stab (670) umfasst, der mit einem zweiten Leiter der Motorsteuervorrichtung (4) verbunden ist, wobei die Motorsteuervorrichtung misst, ob eine elektrische Verbindung zwischen dem ersten Leiter und dem zweiten Leiter über die zwei Stäbe (670) besteht,
wobei das Fahrzeug (1) einen Antrieb mit mindestens einem Elektromotor (12) umfasst, wobei der Antrieb mindestens zwei verschiedene Betriebsmodi umfasst und wobei ein Betriebsparameter des Antriebs in einem ersten Betriebsmodus auf einen ersten Sollbereich und in einem zweiten Betriebsmodus auf einen zweiten Sollbereich begrenzt ist,
wobei der Antrieb in dem zweiten Betriebsmodus betreibbar ist, wenn sich der Verschluss (63) oder das Gehäuse (90) in einer ersten Position befindet, in der das Anzeigeschild (62) sichtbar ist und eine elektrische Verbindung zwischen dem ersten Leiter und dem zweiten Leiter über den ersten Stab (670) und den zweiten Stab (670) besteht, und der Antrieb in dem ersten Betriebsmodus betreibbar ist, wenn sich der Verschluss (63) oder das Gehäuse (90) in einer zweiten Position befindet, in der das Anzeigeschild (62) nicht sichtbar ist und der elektrisch isolierende Haken (65) den ersten Stab (670) und den zweiten Stab (670) in der zweiten Position trennt.

## Revendications

1. Véhicule (1) avec un entraînement ayant au moins un moteur électrique (12), l'entraînement comportant au moins deux modes de fonctionnement différents, un paramètre de fonctionnement de l'entraînement étant limité à une première zone nominale dans un premier mode de fonctionnement et à une deuxième zone nominale dans un deuxième mode de fonctionnement, le véhicule (1) comportant une plaque d'immatriculation de véhicule (14) qui est montée sur un support (60), la plaque d'immatriculation du véhicule (14) comportant une plaque de support (61),
une plaque d'affichage (62), un crochet électriquement isolant (65) et soit un capot (66) avec un obturateur (63) soit un boîtier (90),
le support (60) comportant un interrupteur mécanique (67),
le véhicule comportant un dispositif de commande de moteur (4), l'interrupteur (67) comportant une première tige (670) qui est reliée à un premier conducteur du dispositif de commande de moteur (4), et l'interrupteur (67) comportant une deuxième tige (670) qui est reliée à un deuxième conducteur du dispositif de commande de moteur (4), dans lequel le dispositif de commande de moteur mesure s'il existe une connexion électrique entre le premier conducteur et le deuxième conducteur via les deux tiges (670),
dans lequel l'entraînement est opérable dans le deuxième mode de fonctionnement, si l'obturateur (63) ou le boîtier (90) est dans une première position dans laquelle la plaque d'affichage (62) est visible et il existe une connexion électrique entre le premier conducteur et le deuxième conducteur via la première tige (670) et la deuxième tige (670), et dans lequel l'entraînement est opérable dans le premier mode de fonctionnement, si l'obturateur (63) ou le boîtier (90) est dans une deuxième position dans laquelle la plaque d'affichage (62) n'est pas visible et le crochet électriquement isolant (65) sépare la première tige (670) et la deuxième tige (670) dans la deuxième position.

2. Véhicule (1) selon la revendication 1,
dans lequel la puissance continue nominale de l'entraînement est limitée à une première valeur maximale dans le premier mode de fonctionnement et est limitée à une deuxième valeur maximale dans le deuxième mode de fonctionnement, la deuxième valeur maximale étant plus grande que la première valeur maximale.

3. Véhicule (1) selon l'une des revendications 1 ou 2,
dans lequel la vitesse du véhicule (1) est limitée à une première valeur maximale dans le premier mode de fonctionnement et est limitée à une deuxième valeur maximale dans le deuxième mode de fonctionnement, la deuxième valeur maximale étant plus grande que la première valeur maximale.

4. Disposition de plaque d'immatriculation du véhicule (14), la plaque d'immatriculation du véhicule (14) comportant une plaque de support (61), une plaque d'affichage (62), un crochet électriquement isolant (65) et soit un capot (66) avec un obturateur (63) soit un boîtier (90),
la plaque d'immatriculation du véhicule (14) étant prévue pour être montée sur un support (60) d'un véhicule (1), le support (60) comportant un interrupteur mécanique (67),
le véhicule comportant un dispositif de commande de moteur (4), l'interrupteur (67) comportant une première tige (670) qui est reliée à un premier conducteur du dispositif de commande de moteur (4), et l'interrupteur (67) comportant une deuxième tige (670) qui est reliée à un deuxième conducteur du dispositif de commande de moteur (4), dans lequel le dispositif de commande de moteur mesure s'il existe une connexion électrique entre le premier conducteur et le deuxième conducteur via les deux tiges (670),
le véhicule (1) comportant un entraînement avec au moins un moteur électrique (12), l'entraînement comportant au moins deux modes de fonctionnement différents, un paramètre de fonctionnement de l'entraînement étant limité à une première zone nominale dans un premier mode de fonctionnement et à une deuxième zone nominale dans un deuxième mode de fonctionnement,
l'entraînement étant opérable dans le deuxième mode de fonctionnement, si l'obturateur (63) ou le boîtier (90) est dans une première position dans laquelle la plaque d'affichage (62) est visible et il existe une connexion électrique entre le premier conducteur et le deuxième conducteur via la première tige (670) et la deuxième tige (670), et l'entraînement étant opérable dans le premier mode de fonctionnement, si l'obturateur (63) ou le boîtier (90) est dans une deuxième position dans laquelle la plaque d'affichage (62) n'est pas visible et le crochet électriquement isolant (65) sépare la première tige (670) et la deuxième tige (670) dans la deuxième position.
